# EUROPEAN PATENT SPECIFICATION

(11) **EP 3 680 536 B1**
(45) Date of publication and mention of the grant of the patent: **06.07.2022**
(21) Application number: 20151155.7
(22) Date of filing: 10.01.2020
(51) Int. Cl.: F16L 33/207, F16L 33/24

(54) **INSERT AND JOINT FOR FLEXIBLE PIPES AND METHOD FOR FIXING A JOINT TO A FLEXIBLE PIPE**
ANSCHLUSSSTUTZEN UND VERBINDUNG FÜR FLEXIBLE LEITUNGEN, UND VERFAHREN, UM EINE VERBINDUNG AN EINER FLEXIBLEN LEITUNG ZU BEFESTIGEN
EMBOUT ET RACCORD POUR TUYAUX FLÉXIBLES, ET PROCÉDÉ POUR ATTACHER UN RACCORD À UN TUYAU FLÉXIBLE

(30) Priority: 11.01.2019 IT 201900000523
(43) Date of publication of application: 15.07.2020
(73) Proprietor: Techinit Srl, 35020 Albignasego (Padova) (IT)
(72) Inventor: LAMENTI, RICCARDO, 35020 Albignasego (Padova) (IT)
(74) Representative: Marri, Luca

(56) References cited:
- WO-A1-2018/071352
- DE-A1- 10 126 429
- FR-A- 1 372 180
- GB-A- 2 088 001

## Description

The present invention relates to the technical sector of accessories for flexible and elastically expandable pipes for conveying fluids.

In particular, the present invention relates to the sector of multi-layer flexible pipes, which are preferably made of plastic and are used in particular in the oil hydraulics sector.

In particular, the present invention relates to an insert for a joint designed to be connected to one end of a flexible pipe made of polymeric material.

Moreover, the present invention relates to a joint comprising a fixing bushing and an insert of the aforementioned type and a method for fixing the joint to a flexible pipe.

For some time, for example in the oil hydraulics sector, flexible pipes for conveying fluids, including fluids under pressure, preferably made of multi-layer plastic material, have been known.

In order to connect a flexible pipe to another flexible pipe or to an end part of a machine, joints made of metallic material and designed to be fixed to one end of the flexible pipe to be connected are also known.

Usually these joints comprise an insert having a head and a body designed to be inserted inside the flexible pipe and a bushing positioned on the outside of the wall of the pipe.

In particular, the body and the head of the insert are hollow so as to allow the fluid to pass through and the bushing comprises a cylindrical body with a pair of openings for inserting the flexible pipe.

The insertion of the body of the insert inside the pipe occurs by means of a thrusting action along an axial direction parallel to the axis of longitudinal extension of the insert. The head of the insert has a diameter greater than the body and therefore remains outside the pipe.

After the body of the insert has been inserted with force inside the pipe, the bushing is compressed radially against the wall of the pipe so as to stably fix the latter to the insert positioned inside it. Therefore, following compression, the flexible pipe is stably retained between the bushing and the body of the insert.

Moreover, the body of the insert comprises a central portion with an outer surface provided with a plurality of grooves alternating with a plurality of radial projections or crests. The inner cylindrical wall of the bushing also comprises a plurality of grooves alternating with a plurality of radial projections or crests.

The profile of the projections of the insert complements the profile of the projections of the bush so that, before compression of the bush, the projections of the insert radially face the grooves of the bush and vice versa.

Moreover, these joints may comprise a connector, for example a nut, mounted on the head of the insert so as to allow connection thereof with a machine or a portion of a pipe to be connected.

The main drawback of these known solutions lies in the fact that with insertion of the insert the working diameter for the liquid or gas flow through the joint is greatly reduced.

For example, in the case of a standard joint with a diameter of ¼" according to the SAE Standard, the reduction in the working diameter may be as much as 78%.

This drawback results in a variation in the flowrate of the fluid through the joint, which may alter the operation of the machine supplied via the pipes.

A further drawback lies in the fact that the axial insertion of the insert into the pipe, performed forcibly with a thrusting action, requires the use of special tools and a considerable thrusting force.

Moreover, the insertion with a thrusting force may cause damage to the inner walls of the flexible pipe. Breakages of the pipes or any loss of head during passage of the fluid may in some cases occur in the region of the damaged portions.

The drawbacks described above arise in particular when the diameter of the insert is greater than the diameter of the flexible pipe.

Examples of known inserts are disclosed in the documents WO 2018/071352 A1 and FR 1 372 180 A.

A task of the present invention is to provide a joint comprising an insert which is able to solve the drawbacks mentioned above.

In particular, a task of the present invention is to provide a joint which ensures an optimum seal at the end of the flexible pipe to which it is fixed and a limited reduction of the internal nominal diameter of the flexible pipe.

A further task of the present invention is to provide a joint which requires a limited thrusting force for insertion of the insert inside the flexible pipe.

Another task of the present invention is to provide a joint and a method for fixing it to the flexible pipe, which require solely commonly available tools for insertion of the insert in the flexible pipe.

A further task of the present invention is to provide a joint for flexible pipes which avoids damage to the inner wall of the flexible pipe during insertion of the insert.

Another task of the present invention is to provide a joint which ensures that a stable connection with the flexible pipe is maintained and allows head losses to be avoided.

The object and the main tasks described above are achieved with an insert according to claim 1, with a joint according to claim 9, with an assembly comprising a flexible pipe and a joint of the type described above according to claim 10 and with a method for fixing the joint to the flexible pipe according to claim 11.

In order to illustrate more clearly the innovative principles of the present invention and its advantages compared to the prior art, an embodiment of the invention will be described below by way of a non-limiting example with the aid of the accompanying drawings. In the drawings:
- Figures 1a and 1b show, respectively, a perspective view and a side view of an insert according to the present invention in a first embodiment;
- Figures 2a and 2b show, respectively, a perspective view and a side view of an insert according to the present invention in a second embodiment;
- Figure 3 shows a front view of the head of the insert shown in Figures 2a-2b;
- Figure 4 shows a perspective view of a joint for flexible pipes in accordance with the present invention comprising the insert shown in Figures 1a and 1b;
- Figure 5 shows a side view of the joint according to Figure 4;
- Figure 6a shows a perspective view of a component of the joint according to Figure 4;
- Figure 6b shows a perspective view of another component of the joint according to Figure 4;
- Figure 7 shows a cross-sectioned side view of the joint according to Figure 5.
- Figure 8 shows a cross-sectioned side view of an assembly comprising a flexible pipe and a joint of the type indicated above designed to be fixed to the end of the flexible pipe by means of compression of a bushing.

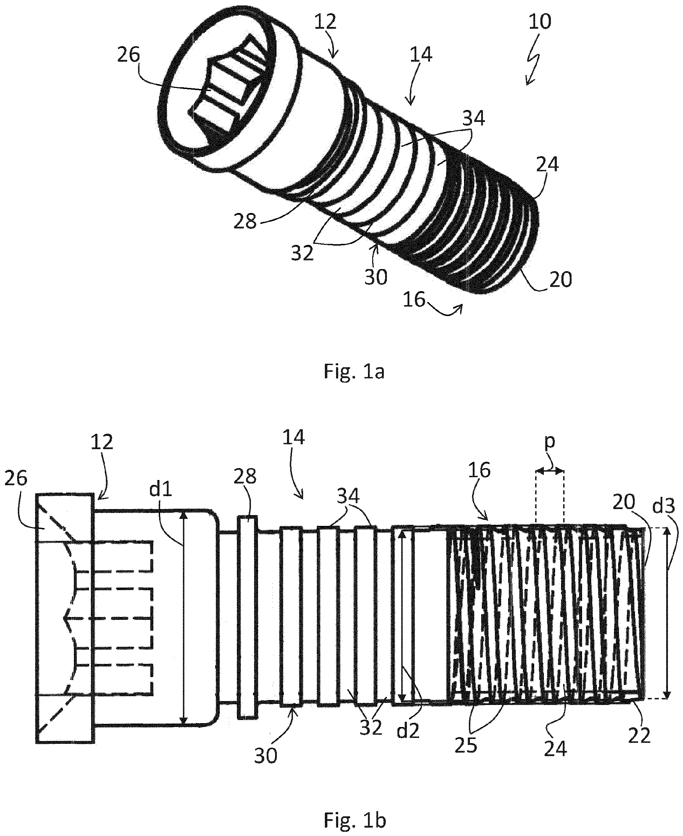

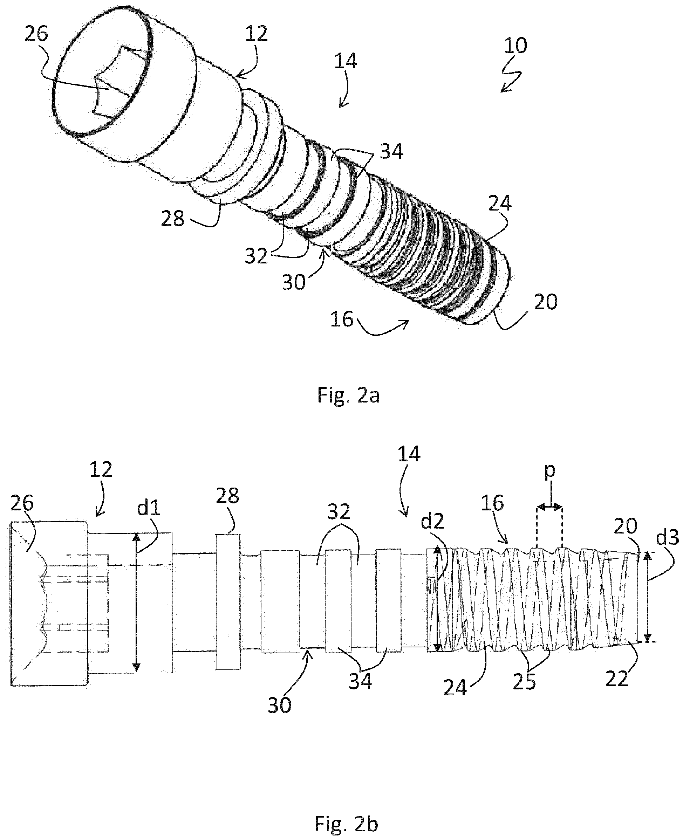

With reference to the attached figures, in particular Figures 1a-1b and 2a-2b, the present invention refers to an insert indicated by the reference number 10, for a joint designed to be fixed to a flexible pipe.

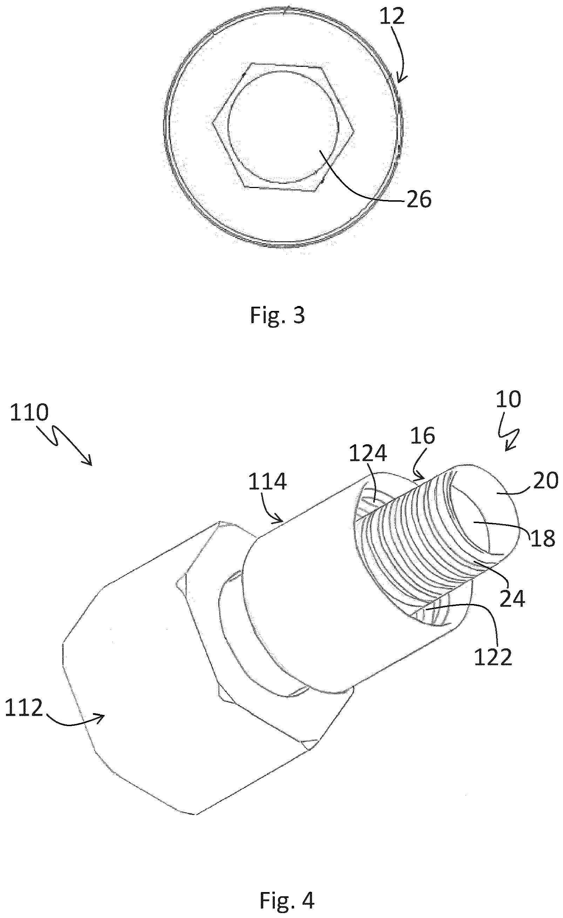

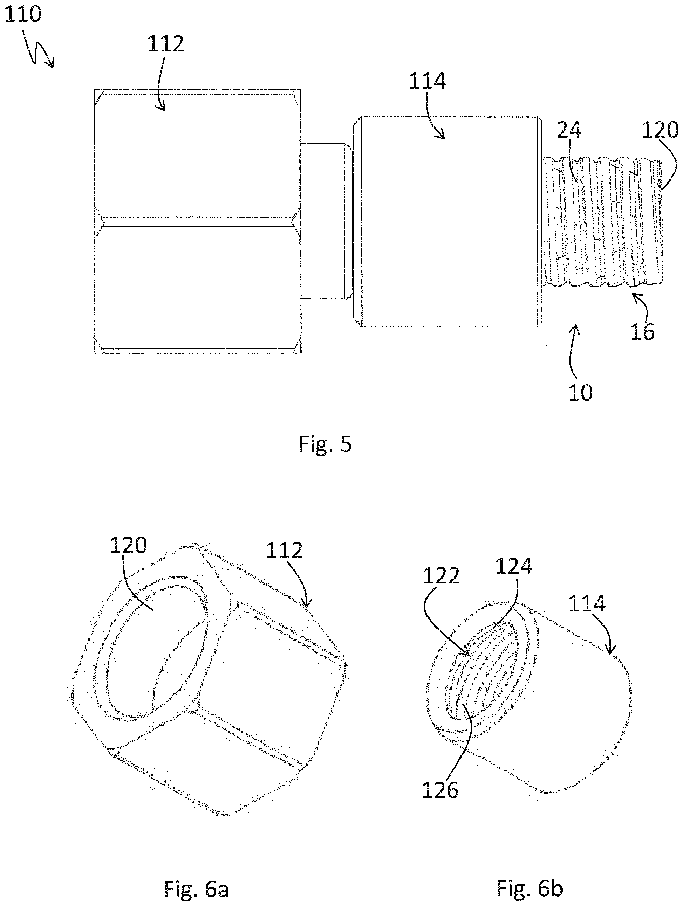

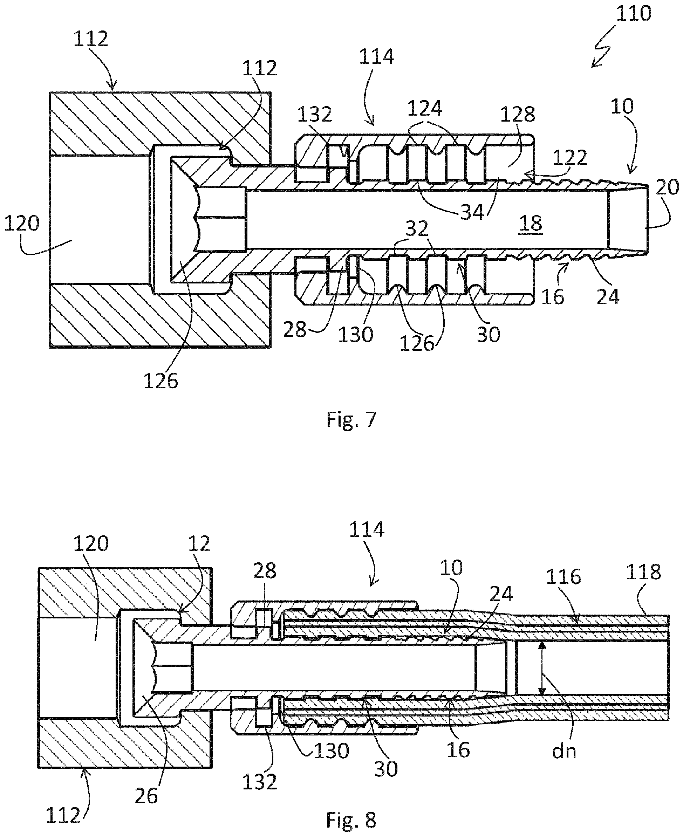

In a manner known per se, the joint, which is illustrated more clearly in Figures 4 and 5 and indicated by the reference number 110, comprises in addition to the insert 10 also a nut 112 and a bushing 114, which are illustrated in Figures 6a and 6b respectively. Moreover, the assembly comprising the flexible pipe 116 and the joint 110 fixed to the end of the pipe 116 is shown in Figure 8.

The joint 110 is fixed to the end of the flexible pipe 116 by means of radial compression of the bushing 114 against the outer wall 118 of the pipe 116 after the insert 10 has been inserted inside it.

This type of joint 110 is preferably used in the oil hydraulics sector and allows a flexible pipe to be connected to a machine, for example an air conditioner, or other pipe, using, for example, further adapters already known in the sector.

Moreover, the insert 10, the bushing 114 and the nut 112 are made preferably of metallic material, for example a material chosen from within the group comprising, for example, brass, steel or titanium.

As shown in Figures 1a-1b and 2a-2b, the insert 10 comprises a head 12 and a body 14 integral with the head and having an end portion 16 designed to be inserted inside the flexible pipe 116.

During assembly, the body 14 is inserted at least partially inside the flexible pipe 116, while the head 12 is kept outside the pipe 116, as shown in Figure 8.

In a manner known per se, both the body 14 and the head 12 of the insert 10 are hollow and have a longitudinal through-hole 18 for the fluid, shown more clearly in Figures 7 and 8. Moreover, both the body 14 and the head 12 have a circular cross-sectional form, with the diameter d1 of the head 12 greater than the diameter d2 of the body 14.

Preferably, in order to facilitate the initial insertion of the insert 10 inside the flexible pipe 116, the free end 20 of the end portion 16 has a smaller diameter d3 than the external diameter d2 of the remaining part of the body 14. Namely the free end 20 has end chamfers 22, in particular an internal chamfer and an external chamfer, with a varied inclination on the opposite sides of the outer wall, as shown in Figures 1b and 2b. Suitably, the external chamfer is dependent on the diameter d2 of the body 14 of the insert 10.

Advantageously inserts with different values of the diameter of the free end, depending on the type of flexible pipe to be fixed and the specific use, may be provided.

The nut 112 of the joint 110 is mounted on the head 12 of the insert 10, as clearly shown in Figures7 and 8, and has a longitudinal passage 120 inside which the head 12 of the insert 10 is locked.

In a manner known per se, the nut 112 has a preferably hexagonal cross-sectional shape so as to be able to be coupled together with a spanner for rotating and tightening it onto the machine part to be connected to the pipe.

In accordance with the present invention, the end part 16 of the insert 10 comprises a helical thread 24, as shown in Figures 1a-1b and 2a-2b, for inserting the insert 10 in the pipe by means of screwing before radial compression of the bushing 114.

Advantageously, as shown more clearly in Figures 1b and 2b, the crests 25 of the helical thread 24 have a chamfered profile and a smaller biting edge compared to the ordinary thread of a screw of the known type. This feature prevents the helical thread 24 from damaging the inner wall of the pipe 116 during screwing.

For this purpose and merely by way of example, the profile of the helical thread 24 may have an angle with a value of between 25° and 35°, preferably close to 30°, relative to the core on the side directed towards the pipe 116 and an angle with a value of between 55° and 65°, preferably close to 60°, relative to the core on the side directed towards the nut 112.

In the embodiment shown in the figures, the end portion 16 has a cylindrical shape. However, in an alternative embodiment, not shown in the figures, the end portion may also have a conical shape.

Moreover, the head 12 of the insert 10 is shaped so as to interact with a tool, not shown in the figures since known per se, designed to cause screwing of the thread 24 inside the pipe 116 so as to allow insertion of the insert 10 inside the pipe 116, before compression of the bushing 114.

The two embodiments of the insert 10 shown in Figures 1a-1b and 2a-2b, respectively, differ from each other with regard to certain dimensional values of the various components, but share the same essential features.

Suitably, the pitch p of the helical thread 24 has a value of between 1 and 2.5 mm and preferably close to 1.5 mm, as shown in Figures 1b and 2b.

Moreover, the value of the pitch of the thread 24 is preferably between 2.33 and 3 times the depth of the thread 24.

The profile and the pitch of the helical thread 24 are especially designed to develop a force sufficient to draw the insert 10 inside the flexible pipe 116 without damaging the internal layer or affecting the seal of the joint.

Moreover, the helical thread 24 preferably comprises at least 4 or 5 windings since it has been established that below this number the thread proves to be of no use for all diameters of the inserts.

In this way, the volume inside the flexible pipe 116 necessary for the insert 10 is generated by screwing the insert itself during insertion, without a significant reduction in the internal nominal diameter dn of the flexible pipe 116.

After insertion of the body 14, the insert 10 is no longer removable from the pipe 116 except by means of direct pulling outwards, with consequent damage to the inner wall of the pipe. As shown in the figures, the end portion 16 is entirely occupied by the helical thread 24 and may have an extension of at least 1 cm.

Moreover, from the figures it can be seen that the different embodiments of the insert 10 may have a different extension of the end portion 16.

As regards the shaping of the head 12, the head comprises a hexagon-shaped cavity 26 formed by means of broaching so as to allow insertion of a complementary shaped tool able to cause screwing of the end portion 16, as shown more clearly in Figure 3.

For example, the tool may be an Allen key and the shaped cavity 26 may be accessible by the spanner through the internal passage 120 of the nut 112 mounted on the head 12.

Moreover, the shaped cavity 26 allows the passage 18 of the insert 10 to remain in fluid communication with the passage 120 of the nut 112 and its configuration is such as to avoid adversely affecting the pressure tightness of the entire joint 110.

Moreover, insertion by means of screwing of the insert 10 makes it possible to avoid insertion of the insert by means of thrusting which could damage the inner wall of the pipe 116 and adversely affect the pressure-tightness in the region of the joint.

The head 12 may also be shaped with a different shaped cavity so as to interact with tools different from that indicated above, provided that the tools perform rotation of the insert 10 and therefore screwing of the end portion 16.

Conveniently, the insert 10 may comprise a radial flange 28 situated immediately downstream of the head 12 and having a larger diameter than the rest of the body 14 of the insert 10. The function of the radial flange 28 will be explained in detail below.

Advantageously, as shown more clearly in Figures 1a-1b and 2a-2b, the body 14 of the insert 10 also comprises a central portion 30 arranged between the head 12 and the end portion 16 and designed to be inserted also inside the flexible pipe 116, as shown in Figure 8. The radial flange 28 described above is preferably positioned between the head 12 of the insert 10 and the central portion 30 of the body 14.

The central portion 30 comprises an external surface with a plurality of radial grooves 32 alternating with a plurality of radial ribs 34 along the longitudinal direction, as shown in Figures 1a-1b, 2a-2b, 7 and 8. In a manner known per se, the ribs 34 allow the fluid-tightness to be maintained by means of radial compression outwards.

In a manner known per se, the bushing 114 of the joint 110 has a central passage 122 for insertion of the flexible pipe 116 and is designed to be positioned on the outside of the side wall 118 of the flexible pipe 116, as shown in Figure 8, before insertion of the insert 10 into the pipe 116 and compression thereof.

Suitably, the inner wall of the bush 114 has a portion with a plurality of internal grooves 124 alternating with respective radial ribs 126 along the longitudinal direction, as can be seen in Figures 6b, 7 and 8. Moreover, the bushing 114 comprises a further portion having an internal surface 128 without grooves.

Before proceeding with compression, the bushing 114 is positioned at the end of the flexible pipe 116 so as to be superimposed on the body 14 of the insert 10 with its radial ribs 126 facing the grooves 32 of the body 14 of the insert 10 with the pipe 116 arranged in between. In this operating condition, the portion of the bushing 114 without grooves is partially superimposed on the end portion 16 with the thread 24 of the body 14, as shown in Figures 7a and 8.

The compression of the bushing 114 is performed by means of a suitable tool against the outer wall 118 of the flexible pipe 116 so as to lock and fix stably the insert 10 to the pipe 116.

In this operating condition, the central portion 30 of the insert 10 with the grooves 32 receives by means of compression the portion of the bushing 114 with the grooves 124, the pipe 116 being arranged between the grooves 124 of the bushing 114 and that of the insert 10, as shown in Figure 8.

The above shows that the end portion 16 of the body with the helical thread 24 receives by means of compression the portion of the bushing 114 without grooves.

Moreover, the inner surface of the bushing 114 may comprise an annular wall 130, visible in Figures 7 and 8. When the bushing 114 is superimposed on the insert 10 before compression, this annular wall 130 is situated opposite the radial flange 28 of the insert 10 and the end edge of the pipe 116 comes into contact with the annular wall 130.

Advantageously, the inner surface of the bushing 114 may have a radial recess 132 designed to receive the radial flange 28 of the insert 10 after the bushing 114 has been compressed.

The radial recess 132 is situated upstream of the annular wall 130, namely in a position close to the head 12 of the insert 10 in the superimposed operating condition described above, and therefore its interaction with the radial flange 28 does not involve the arrangement of the flexible pipe 116 in between.

The configuration described above facilitates the alignment of the bushing 114 with the insert 10 inserted and screwed into the flexible pipe 116 when superimposition occurs and before compression.

Moreover, this configuration allows, in a manner known per se in the sector, the securing together of the insert 10 and bushing 114 independently of securing with the flexible pipe arranged in between.

In operational terms, the method for fixing the flexible pipe 116 to the joint 110 of the type described above involves a step a) of positioning the bushing 114 outside the wall of the pipe 116 and a step b) of inserting the end portion 16 of the insert 10 inside the pipe 116.

Moreover, a step c) of screwing the insert 10, namely its end portion 16, inside the flexible pipe 116 by means of a tool which acts on the head 12 of the insert 10 until the body 14 thereof is completely inserted inside the flexible pipe 116 and a step d) of compressing the bush 114 against the outer wall 118 of the pipe 116 so as to lock the insert 10 inserted therein. From the above description it is now clear how the insert, the joint for flexible pipes and the method for fixing the joint to a flexible pipe allow the predefined objects to be achieved.

In particular, it is clear how the presence of the helical thread on the end portion of the insert body ensures the stable connection of the joint to the pipe without damaging the inner wall of the latter. The connection thus obtained also allows an optimum pressure tightness to be maintained.

Advantageously, the use of this particular type of thread with a reduced biting edge avoids the need to perform insertion of the insert inside the pipe with a thrusting action which could damage the inner wall of the pipe and requires specific tools which are not always easily found.

Obviously the above description of the embodiments applying the innovative principles of the present invention is provided only by way of example of these innovative principles and must therefore not be regarded as limitative. The subject-matter for which protection is sought is defined by the appended claims.

## Claims

1. Insert (10) for a joint (110) designed to be fixed to a flexible pipe (116) by radially compressing a bushing (114) positioned outside the pipe (116), which insert (10) comprises a body (14) with an end portion (16) designed to be inserted in the flexible pipe (116) and a head (12) integral with said body (14) and shaped to interact with a tool so as to allow the insertion of the insert (10) into the pipe (116) by means of screwing;
wherein said end portion (16) comprises a helical thread (24) for inserting, by means of screwing, said insert (10) into the pipe (116) before compression of the bushing (114); **characterized in that** said head (12) comprises a shaped cavity (26) for inserting a tool designed to allow the screwing of the end portion (16) into the flexible pipe (116).

2. Insert (10) according to claim 1, **characterized in that** the thread crests of said helical thread (24) have a chamfered profile.

3. Insert (10) according to claim 1, **characterized in that** the pitch (p) of said helical thread (24) is comprised between 1 and 2.5 mm.

4. Insert (10) according to claim 3, **characterized in that** the pitch (p) of said helical thread (24) is equal to about 1.5 mm.

5. Insert (10) according to claim 1, **characterized in that** said threaded end portion (16) has a longitudinal extension of at least 1 cm.

6. Insert (10) according to claim 1, **characterized in that** said shaped cavity (26) has a hexagon shape formed by means of broaching.

7. Insert (10) according to claim 1, **characterized in that** the free end (20) of said end portion (16) has a diameter (d3) which is smaller than the diameter (d2) of said body (14) for facilitating the insertion of the insert (10) into the pipe (116).

8. Insert (10) according to claim 1, **characterized in that** said body (14) comprises a central portion (30) having a plurality of radial grooves (32) alternating with radial ribs (34) along the longitudinal direction.

9. Joint (110) designed to be fixed to a flexible pipe (116) and comprising:
- an insert (10) having a head (12) and a body (14) designed to be inserted into the flexible pipe (116);
- a bushing (114) designed to be positioned outside the outer wall (118) of the pipe (116) and to be radially compressed against the body (14) of said insert (10) inserted into the pipe (116) with said pipe arranged therebetween;
**characterized in that** the insert (10) is of the type according to any one of the claims 1 to 8.

10. Assembly comprising a flexible pipe (116) and a joint (110) fixed to an end of the flexible pipe (116), **characterized in that** said joint (110) is of the type according to claim 9.

11. Method for fixing a flexible pipe (116) to a joint (110) comprising an insert (10) according to any one of the claims 1 to 8 and a bushing (114), which method comprises the following steps:
a) positioning said bushing (114) outside the side wall (118) of the flexible pipe (116);
b) inserting the end portion (16) of said insert (10) into the flexible pipe (116);
c) screwing the end portion (16) of the insert (10) inside the flexible pipe (116) using a tool which acts on the head (12) of said insert (10) until the body (14) is inserted inside the flexible pipe (116);
d) compressing the bushing (114) against the outer side wall (118) of the pipe (116) so as to block the insert (10) inside the pipe (116);
wherein shaped cavity (26) for inserting the tool comprised in said head (12) is designed to allow the step c) of screwing of the end portion (16) into the flexible pipe (116).

## Patentansprüche

1. Ein Einsatz (10) für eine Verbindung (110), die dazu entworfen ist, an einem flexiblen Rohr (116) durch radiales Zusammendrücken einer außerhalb des Rohrs (116) angeordneten Muffe (114) befestigt zu werden, wobei der Einsatz (10) einen Körper (14) mit einem Endabschnitt (16), der dazu entworfen ist, in das flexible Rohr (116) eingeführt zu werden, und einen Kopf (12), der mit dem Körper (14) einstückig ist und so geformt ist, dass er mit einem Werkzeug zusammenwirkt, um das Einführen des Einsatzes (10) in das Rohr (116) durch Verschrauben zu ermöglichen, aufweist;
wobei der Endabschnitt (16) ein schraubenförmiges Gewinde (24) zum Einführen des Einsatzes (10) in das Rohr (116) vor dem Zusammendrücken der Muffe (114) durch Verschrauben aufweist;
**dadurch gekennzeichnet, dass** der Kopf (12) einen geformten Vertiefung (26) zum Einführen eines Werkzeugs umfasst, das dazu bestimmt ist, das Einschrauben des Endabschnitts (16) in das flexible Rohr (116) zu ermöglichen.

2. Der Einsatz (10) nach Anspruch 1, **dadurch gekennzeichnet, dass** die Gewindespitzen des schraubenförmigen Gewindes (24) ein abgeschrägtes Profil aufweisen.

3. Der Einsatz (10) nach Anspruch 1, **dadurch gekennzeichnet, dass** die Steigung (p) des schraubenförmigen Gewindes (24) zwischen 1 und 2,5 mm liegt.

4. Der Einsatz (10) nach Anspruch 3, **dadurch gekennzeichnet, dass** die Steigung (p) des schraubenförmigen Gewindes (24) etwa 1,5 mm beträgt.

5. Der Einsatz (10) nach Anspruch 1, **dadurch gekennzeichnet, dass** der mit einem Gewinde versehene Endabschnitt (16) eine Längsausdehnung von mindestens 1 cm aufweist.

6. Der Einsatz (10) nach Anspruch 1, **dadurch gekennzeichnet, dass** der geformte Vertiefung (26) eine sechseckige Form hat, die durch Räumen gebildet wird.

7. Der Einsatz (10) nach Anspruch 1, **dadurch gekennzeichnet, dass** das freie Ende (20) des Endabschnitts (16) einen Durchmesser (d3) aufweist, der kleiner ist als der Durchmesser (d2) des Körpers (14), um das Einführen des Einsatzes (10) in das Rohr (116) zu erleichtern.

8. Der Einsatz (10) nach Anspruch 1, **dadurch gekennzeichnet, dass** der Körper (14) einen zentralen Abschnitt (30) mit einer Vielzahl von radialen Nuten (32) aufweist, die sich mit radialen Rippen (34) entlang der Längsrichtung abwechseln.

9. Eine Verbindung (110), die dazu entworfen ist, an einem flexiblen Rohr (116) befestigt zu werden, und die aufweist:
- einen Einsatz (10) mit einem Kopf (12) und einem Körper (14), der dazu entworfen ist, in das flexible Rohr (116) eingeführt zu werden;
- eine Muffe (114), die dazu entworfen ist, außerhalb der Außenwand (118) des Rohrs (116) positioniert zu werden und radial gegen den Körper (14) des Einsatzes (10) zusammengedrückt zu werden, der in das Rohr (116) eingesetzt ist, wobei das Rohr dazwischen angeordnet ist;
**dadurch gekennzeichnet, dass** der Einsatz (10) einer nach einem der Ansprüche 1 bis 8 ist.

10. Eine Baugruppe, die ein flexibles Rohr (116) und eine an einem Ende des flexiblen Rohrs (116) befestigte Verbindung (110) umfasst, **dadurch gekennzeichnet, dass** die Verbindung (110) eine gemäß Anspruch 9 ist.

11. Ein Verfahren zur Befestigung eines flexiblen Rohrs (116) an einer Verbindung (110), die einen Einsatz (10) nach einem der Ansprüche 1 bis 8 und eine Muffe (114) umfasst, wobei das Verfahren die folgenden Schritte umfasst:
a) Positionierung der Muffe (114) außerhalb der Seitenwand (118) des flexiblen Rohrs (116);
b) Einsetzen des Endabschnitt (16) des Einsatzes (10) in das flexible Rohr (116);
c) Einschrauben des Endabschnitts (16) des Einsatzes (10) in das flexible Rohr (116) unter Verwendung eines Werkzeugs, das auf den Kopf (12) des Einsatzes (10) wirkt, bis der Körper (14) in das flexible Rohr (116) eingeführt ist;
d) Zusammendrücken der Muffe (114) gegen die äußere Seitenwand (118) des Rohres (116), um den Einsatz (10) im Inneren des Rohres (116) zu blockieren;
wobei die geformte Vertiefung (26) zum Einsetzen des Werkzeugs in dem Kopf (12) dazu entworfen ist, den Schritt c) des Einschraubens des Endabschnitts (16) in das flexible Rohr (116) zu ermöglichen.

## Revendications

1. Embout (10) pour un raccord (110) conçu pour être fixé sur un tuyau flexible (116) en comprimant radialement une douille (114) positionnée à l'extérieur du tuyau (116), lequel embout (10) comprend un corps (14) avec une partie d'extrémité (16) conçue pour être insérée dans le tuyau flexible (116) et une tête (12) solidaire avec ledit corps (14) et formée pour interagir avec un outil afin de permettre l'insertion de l'embout (10) dans le tuyau (116) au moyen du vissage ;
dans lequel ladite partie d'extrémité (16) comprend un filetage hélicoïdal (24) pour insérer, au moyen du vissage, ledit embout (10) dans le tuyau (116) avant la compression de la douille (114) ;
**caractérisé en ce que** ladite tête (12) comprend une cavité formée (26) pour insérer un outil conçu pour permettre le vissage de la partie d'extrémité (16) dans le tuyau flexible (116).

2. Embout (10) selon la revendication 1, **caractérisé en ce que** les crêtes de filetage dudit filetage hélicoïdal (24) ont un profil chanfreiné.

3. Embout (10) selon la revendication 1, **caractérisé en ce que** le pas (p) dudit filetage hélicoïdal (24) est compris entre 1 et 2,5 mm.

4. Embout (10) selon la revendication 3, **caractérisé en ce que** le pas (p) dudit filetage hélicoïdal (24) est égal à environ 1,5 mm.

5. Embout (10) selon la revendication 1, **caractérisé en ce que** ladite partie d'extrémité filetée (16) a une extension longitudinale d'au moins 1 cm.

6. Embout (10) selon la revendication 1, **caractérisé en ce que** ladite cavité formée (26) a une forme d'hexagone formée au moyen de brochage.

7. Embout (10) selon la revendication 1, **caractérisé en ce que** l'extrémité libre (20) de ladite partie d'extrémité (16) a un diamètre (d3) qui est inférieur au diamètre (d2) dudit corps (14) pour faciliter l'insertion de l'embout (10) dans le tuyau (116).

8. Embout (10) selon la revendication 1, **caractérisé en ce que** ledit corps (14) comprend une partie centrale (30) ayant une pluralité de rainures radiales (32) alternant avec des nervures radiales (34) le long de la direction longitudinale.

9. Raccord (110) conçu pour être fixé sur un tuyau flexible (116) et comprenant :
un embout (10) ayant une tête (12) et un corps (14) conçu pour être inséré dans le tuyau flexible (116) ;
une douille (114) conçue pour être positionnée à l'extérieur de la paroi externe (118) du tuyau (116) et être radialement comprimée contre le corps (14) dudit embout (10) inséré dans le tuyau (116) avec ledit tuyau agencé entre eux ;
**caractérisé en ce que** l'embout (10) est du type selon l'une quelconque des revendications 1 à 8.

10. Ensemble comprenant un tuyau flexible (116) et un raccord (110) fixé à une extrémité du tuyau flexible (116), **caractérisé en ce que** ledit raccord (110) est du type selon la revendication 9.

11. Procédé pour fixer un tuyau flexible (116) à un raccord (110) comprenant un embout (10) selon l'une quelconque des revendications 1 à 8, et une douille (114), lequel procédé comprend les étapes suivantes consistant à :
a) positionner ladite douille (114) à l'extérieur de la paroi latérale (118) du tuyau flexible (116) ;
b) insérer la partie d'extrémité (16) dudit embout (10) dans le tuyau flexible (116) ;
c) visser la partie d'extrémité (16) de l'embout (10) à l'intérieur du tuyau flexible (116) à l'aide d'un outil qui agit sur la tête (12) dudit embout (10) jusqu'à ce que le corps (14) soit inséré à l'intérieur du tuyau flexible (116) ;
d) comprimer la douille (114) contre la paroi latérale externe (118) du tuyau (116) afin de bloquer l'embout (10) à l'intérieur du tuyau (116) ;
dans lequel la cavité formée (26) pour insérer l'outil compris dans ladite tête (12) est conçue pour permettre l'étape c) consistant à visser la partie d'extrémité (16) dans le tuyau flexible (116).
